Europäisches Patentamt

European Patent Office

Office européen des brevets

(19)

(11) Publication number: **0 414 295 A1**

# EUROPEAN PATENT APPLICATION

(21) Application number: 90202095.7

(22) Date of filing: 01.08.90

(51) Int. Cl.⁵: **F16H 47/06**

(30) Priority: 21.08.89 DE 8910016 U

(43) Date of publication of application:
27.02.91 Bulletin 91/09

(84) Designated Contracting States:
**AT BE CH DE ES FR GB IT LI LU NL SE**

(71) Applicant: **VOLVO CAR SINT-TRUIDEN,**
**naamloze vennootschap**
**Rellestraat 2**
**B-3800 Sint-Truiden(BE)**

(72) Inventor: **Van der Hardt Aberson, Frederik**
**Ernst Carel**
**Hommelvennestraat 45**
**B-3500 Hasselt(BE)**

(74) Representative: **Donné, Eddy**
**Bureau M.F.J. Bockstael nv Arenbergstraat**
**13**
**B-2000 Antwerpen(BE)**

(54) Transmission unit for motor vehicles.

(57) A transmission unit for motor vehicles, consisting of an input shaft (1); a torque converter (30); a drive direction selector (2); a continuously variable belt transmission (3), formed by two adjustable pulleys (4) and (5), on an input and an output shaft (18) and (8) respectively, connected by means of a belt (6); a shaft (9) parallel to the output shaft (8) of the continuously variable belt transmission (3); a gear transmission (7) connecting the output shaft (8) of the continuously variable belt transmission (3) with the parallel shaft (9); a differential gear (11): and a coupling device (10) connecting the differential gear (11) with the shaft (9), where the torque converter (30), the drive direction selector (2) and the primary pulley (4) of the continuously variable belt transmission (3) are positioned axially, so that the torque converter (30) and the gear transmission (7) which connects the output shaft (8) of the continuously variable belt transmission (3) with the parallel shaft (9) are located on opposite sides of the continuously variable belt transmission (3).

Fig.3

## TRANSMISSION UNIT FOR MOTOR VEHICLES.

This invention concerns a transmission unit for motor vehicles, more particularly a gearbox consisting of a drive direction selector coupled with a continuously variable belt transmission.

Nowadays transmission units of the above type are fitted out with a torque converter. If the transmission unit is of the traditional design, for example as found in European patents nos. 109 001 and 143 667, the consequences are that it is more difficult to position a number of the usual gear wheels, compactness suffers, and not enough space is available for fixing the transmission unit to the motor. These drawbacks are further illustrated by the appended diagrams.

The present invention aims at a transmission unit for motor vehicles which does not show the above drawbacks.

For this purpose, the invention comprises a transmission unit for motor vehicles, consisting of an input shaft; a torque converter; a drive direction selector; a continuously variable belt transmission formed by two adjustable pulleys, on an input and an output shaft respectively, connected by means of a belt; a shaft parallel to the output shaft of the continuously variable belt transmission; a gear transmission which connects the output shaft of the continuously variable belt transmission with the above parallel shaft; a differential gear; and a coupling device connecting the differential gear with the parallel shaft - the torque converter, the drive direction selector and the primary pulley of the continuously variable belt transmission being positioned axially. One of the main features of this arrangement is that the torque converter and the gear transmission which connects the output shaft of the continuously variable belt transmission with the parallel shaft are positioned on opposite sides of the continuously variable belt transmission.

In order to illustrate the characteristics of the invention, a recommended design (but not the only possible one) is described below with reference to the appended diagrams, in which:

Figure 1 represents the familiar traditional design of a transmission unit for motor vehicles;

Figure 2 shows the usual design where a torque converter is used;

Figure 3 illustrates the transmission unit as defined by the invention.

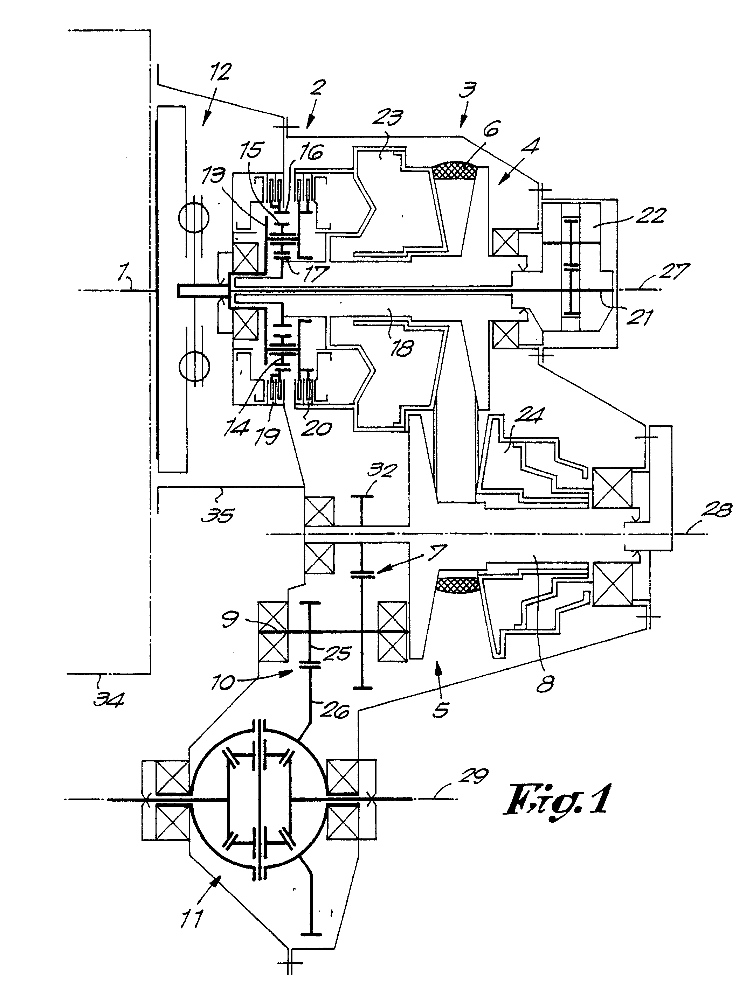

As shown in Figure 1, the transmission unit of the traditional type consists mainly of an input shaft (1); a drive direction selector (2), in other words a reversing unit; a continuously variable belt transmission (3) consisting of a primary pulley (4) driven by the reversing unit, a secondary pulley (5) and a driving belt (6) positicoed in-between; a gear transmission (7) connecting the output shaft (8) of the continuously variable transmission (3) with a shaft (9) positioned parallel to the output shaft (8); and a coupling device (10) connecting the parallel shaft (9) with a differential gear (11).

In the design as shown in the figure, the input shaft (1) is connected with the drive direction selector (2) via a torsional vibration damper (12). The drive direction selector may be of any type and consists, for example, of a planet transmission. In the design in Figure 1, the torsional vibration damper (12) is fixed to the satellite carrier (13). On the satellite carrier (13) several pairs of pinions (14) and (15) are mounted. The two gear wheels (14) and (15) of each pair engage with each other. All the gear wheels (14) engage with a gear ring (16), while the gear wheels (15) engage with the sun wheel (17). In this design, the sun (17) is positioned on the input shaft (18) of the continuously variable belt transmission (3), in other words on the shaft which drives the primary pulley (4). A first coupling (19) makes it possible to lock the gear ring (16) against rotation so that the sun (17) and hence also the input shaft (18) are driven, whilst a second coupling (20) permits the direct connection of the satellite carrier (13) with the primary pulley (4), so that, by operating one coupling or the other - 19 or 20 - the drive moves clockwise or anticlockwise.

In its turn, the shaft (21), driven by the torsional vibration damper (12), drives an oil pump (22) to provide the oil pressure, which, as usual, serves to operate the different components, such as the couplings (19) and (20) and the cylinders (23) and (24) of the pulleys (4) and (5). The controls used for this are familiar enough.

The coupling device (10) between the shaft (9) and the differential gear (11) should ideally consist of a gear transmission formed by a gear wheel (25) positioned on the shaft (9), which engages with the crown wheel (26) of the differential gear (11).

It should be noted that the diagrams represent an unfolded section of the transmission unit and that, in reality, it has to be pictured as being folded so that the axes (27), (28) and (29) are positioned at the vertices of a triangle.

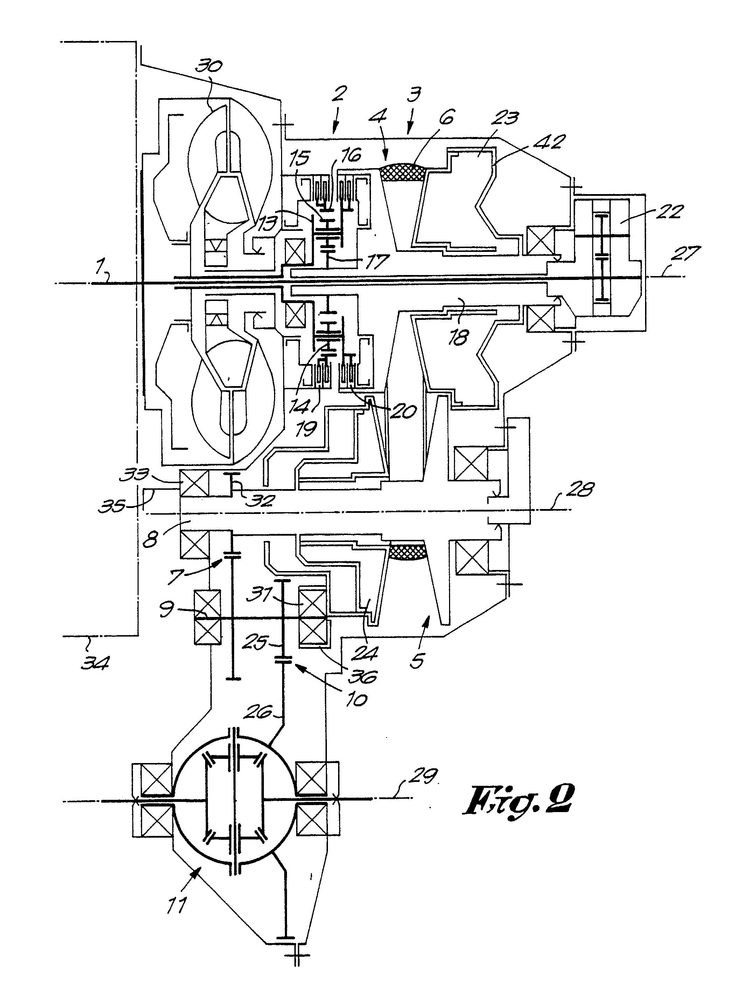

In more recent designs of such transmission units, a torque converter (30) is placed between the input shaft (1) and the drive direction selector (2), particularly as shown in Figure 2.

To assemble the shafts (27), (28) and (29) in the design shown in Figure 2 as closely as possible to each other in reality , it is essential that the crown wheel (26) of the differential gear (11) is positioned next to the relatively large torque converter (30). However, the position of the crown wheel (26) is, in turn, determined by the position of the gear wheel (25) and the presence of the bearing (31). To ensure that the crown wheel (26) can be fully mounted next to the torque converter (30), which is not the case in Figure 2, it is necessary for the gear wheel (25) and the bearing (31), as well as the continuously variable belt transmission (3), which is partially located alongside, to be shifted axially. The drawback of this design is that the total axial length of the transmission unit increases.

Other drawbacks of the design shown in Figure 2 are that only a limited space is available for the gear wheel (32) of the transmission (7), as well as for the installation of the bearing (33) of the shaft (8), and that there is only little space available to fix the motor (34) to the housing (35) of the transmission unit. Furthermore, the bearing (31) cannot be mounted inside the housing (35), but must be fixed to a separate bearing retainer (36).

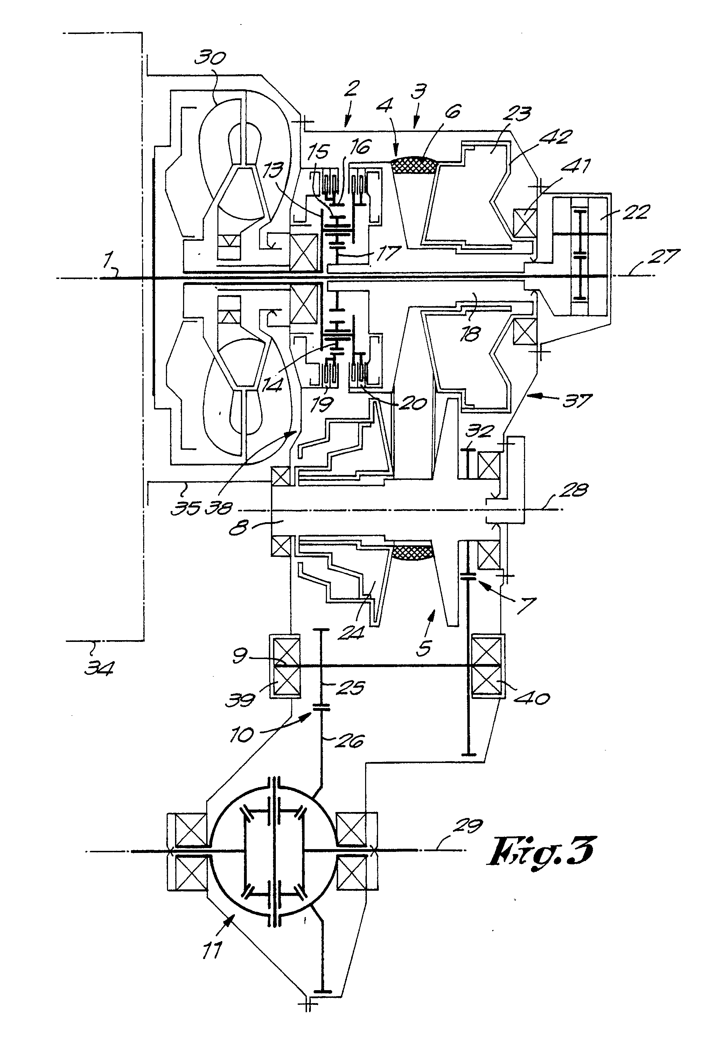

The present invention concerns a transmission unit which does not show the above drawbacks. The recommended design of such a transmission unit is shown in Figure 3; the components are marked with the same reference numbers as in Figures 1 and 2.

As illustrated in Figure 3, the transmission unit which is the subject of the invention, consists of the combination of an input shaft (1); a torque converter (30); a drive direction selector (2); a continuously variable belt transmission (3); a shaft (9) which is parallel to the output shaft (8) of the continuously variable belt transmission (3); a gear transmission (7) which connects the above shaft (8) with the parallel shaft (9); a differential gear (11); and a coupling device (10) which connects the differential gear (11) with the latter shaft - the torque converter (30), the drive direction selector (2) and the primary pulley (4) being positioned axially. The particular characteristic of this assembly is that at least the above-mentioned gear transmission (7) is positioned next to the continuously variable belt transmission (3) opposite the side (38) which faces the torque converter (30).

In this case, too, the coupling device (10) which connects the shaft (9) parallel to the output shaft (8) of the continuously variable belt transmission (3) with the differential gear (11) should preferably consist of a gear transmission. Besides having the characteristics described above, this is positioned axially to the transmission unit between the torque converter (30) and the gear transmission (7).

The transmission unit which is the subject of the invention offers the advantage that the shaft (8), the position of the gear wheel (25) and the presence of the bearing (31) are not critical for the length of the transmission and that, furthermore, sufficient space is available for fixing the motor (34) to the housing (35). Moreover, the diameter of the gear wheel (32) is not limited by the torque converter (30).

The invention also allows the shaft (9) to be mounted at either end in the bearings (39) and (40), which can be directly mounted in the housing (35), as shown in Figure 3.

To further limit the axial length of the transmission unit, the bearing (41), which is situated next to the primary pulley (4), is mounted around the housing (42) of the cylinder (23), instead of directly around the shaft (18) connected with the sun wheel (17).

The present invention is in no way limited to the design described here and illustrated in the diagrams, but is merely an example. On the contrary, transmission units of this kind can be constructed in different shapes and sizes without exceeding the scope of the invention.

## Claims

1.- Transmission unit for motor vehicles, consisting of an input shaft (1); a torque converter (30); a drive direction selector (2); a continuously variable belt transmission (3) formed by two adjustable pulleys (4) and (5), on an input and output shaft (18) and (8) respectively, connected by a belt (6); a shaft parallel to the output shaft (8) of the continuously variable belt transmission (3); a gear transmission (7), which connects the output shaft (8) of the continuously variable belt transmission (3) with the parallel shaft (9); a differential gear (11); and a coupling device (10) connecting the differential gear (11) with the latter shaft (9), where the torque converter (30), the drive direction selector (2) and the primary pulley (4) of the continuously variable belt transmission (3) are positioned axially. The main characteristic of this arrangement is that the torque converter (30) and the gear transmission (7) which connects the output shaft (8) of the continuously variable belt transmission (3) with the parallel shaft (9) are positioned on opposite sides of the continuously variable belt transmission (3).

2. - A transmission unit as described in 1, but distinguished by the fact that the coupling device (10) connecting the shaft (9) parallel to the output shaft (8) of the continuously variable belt transmission (3) with the differential gear (11) consists of a gear transmission, positioned axially to the transmission unit between the torque converter (30) and the gear transmission (7) which connects the output shaft (8) of the continuously variable belt transmission (3) with the parallel shaft (9).

3. A transmission unit as described in 1 or 2, but distinguished by the fact that both ends of the shaft (9), which, as mentioned above, is parallel to the output shaft (8) of the continuously variable belt transmission (3), are directly mounted in bearings in the housing (35) of the transmission unit.

4. A transmission unit as described in 1, 2 or 3, but distinguished by the fact that the bearing (41) next to the primary pulley (4) of the continuously variable belt transmission (3), opposite the torque converter (30), is mounted around the housing (42) of the cylinder (23) which controls the movement of the primary pulley (4).

Fig.1

Fig. 2

*Fig.3*

## DOCUMENTS CONSIDERED TO BE RELEVANT

EP 90202095.7

| Category | Citation of document with indication, where appropriate, of relevant passages | Relevant to claim | CLASSIFICATION OF THE APPLICATION (Int. Cl.5) |
|---|---|---|---|
| A | <u>EP - A1 - 0 096 980</u><br>(BORG-WARNER)<br>* Fig. 1 *<br>-- | 1,2,3,4 | F 16 H 47/06 |
| A | <u>EP - A1 - 0 168 569</u><br>(FORD)<br>* Totality *<br>-- | 1,2 | |
| A | <u>EP - A1 - 0 147 646</u><br>(TOYOTA)<br>* Totality *<br>-- | 1,2 | |
| D,A | <u>EP - A1 - 0 143 667</u><br>(FUJI)<br>* Totality *<br>-- | 1,2 | |
| D,A | <u>EP - A1 - 0 109 001</u><br>(FORD)<br>* Totality *<br>-- | 1,2 | |
| A | <u>US - A - 3 340 749</u><br>(MAGG)<br>---- | | TECHNICAL FIELDS SEARCHED (Int. Cl.5)<br><br>F 16 H 37/00<br>F 16 H 47/00<br>F 16 H 59/00 |

The present search report has been drawn up for all claims

| Place of search | Date of completion of the search | Examiner |
|---|---|---|
| WIEN | 29-11-1990 | HEMMELMEIER |

EPO FORM 1503 03.82 (P0401)